(19) Europäisches Patentamt
European Patent Office
Office européen des brevets

(11) **EP 2 474 501 A1**

(12) **EUROPEAN PATENT APPLICATION**

(43) Date of publication:
**11.07.2012  Bulletin 2012/28**

(51) Int Cl.:
**C01B 3/06** (2006.01)     **G21F 9/00** (2006.01)

(21) Application number: **12075001.3**

(22) Date of filing: **03.01.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **07.01.2011  FR 1100055**<br><br>(71) Applicants:<br>• **Dufour, Jacques Julien Jean**<br>  **75014 Paris (FR)**<br>• **Vinko, Jenny Darja**<br>  **00049 Velletri (RM) (IT)** | (72) Inventors:<br>• **Dufour, Jacques Julien Jean**<br>  **75014 Paris (FR)**<br>• **Dufour, Xavier Jean-Claude Marie**<br>  **59800 Lille (FR)**<br>• **Vinko, Jenny Darja**<br>  **00049 Velletri, Roma (IT)**<br><br>(74) Representative: **Riccardi, Sergio**<br>  **IPSER S.r.l.**<br>  **Via M. Melloni 32**<br>  **20129 Milano (IT)** |

(54) **Energy production device and associated processes**

(57)    The invention deals with a device for producing energy comprizing:
- one reservoir (100,200) containing at least a chemical compound able to ad-absorb hydrogen.
- means (300) to heat the content of the reservoir (100,200),
- means (500, 600, 700, 610, 620, 630, 640) to introduce an hydrogen containing gas in said reservoir and means to control the pressure of that gas in the reservoir, characterized in that the reservoir (100,200) contains also at least a chemical compound having a low work function.

Fig.3

**Description**

FIELD OF THE INVENTION

The present invention belongs to the energy production sector. In detail the device is composed:

-   reservoir, containing at least one chemical compound capable of Hydrogen ab/adsorbtion.
-   devices that allow the heating of the reservoir
-   devices that consent the introduction of gas containing Hydrogen into the reservoir and pressure control device of the same reservoir and
-   the created thermal energy recovery device.

The invention is, however, not limited to the thermal energy production only.

BACKGROUND OF THE INVENTION

There are several known and existing attempts of such heat production devices containing Ni and heating resistance where the thermal energy is recovered by cooling fluid, nevertheless none of these reported inventions are supported by rigorous scientific examination facts (data).

OBJECTS OF THE INVENTION

One of the main objectives of the present invention is to provide an innovative energy production system, capable of rendering high energy performance trough a system, as defined above, using at least one chemical compound with low electron function characteristic.
Such characteristic optimizes the interaction between Hydrogen and chemical compound process increasing the corresponding reaction rate trough the two concurrent processes.
Further characteristics of the above mentioned system :

-   the mentioned chemical compound is a transition metal belonging to the Vanadium group or to the Titanium group or it is an Actinide or Lanthanide adapted to form a metallic hydride or an intermediate hydride between metallic and ionic hydride, or between metallic and covalent hydride.
-   the mentioned chemical compound is one selected from the following elements: Scandium, Yttrium, Lanthanum, Actinium, Caesium, Praseodymium, Neodymium, Samarium, Gadolinium, Terbium, Dysprosium, Holmium, Erbium, Thulium, Lutetium, Titanium, Zirconium, Hafnium, Thorium, Protactinium, Uranium, Neptunium, Plutonium, Americium, Vanadium, Niobium, Tantalum, Chromium, Iron, Cobalt, Nickel, Palladium, Magnesium, Europium, Copper.
-   the mentioned chemical compound, able to ab/adsorb Hydrogen, can also be an alloy of some or any of the above elements. For example: an alloy Iron/Titanium or an alloy Nickel/Lanthanum.
-   the mentioned chemical compound with low electron work function is: an alkaline metal, alkaline earth, oxide of an alkaline metal or oxide of an alkaline earth or a compound comprising at least one atom of alkaline metal or alkaline earth, or further, Calcium or Calcium Oxide.
-   the mentioned chemical compound with low electron work function is Lanthanum-hexaboride.
-   the mentioned chemical compound capable to ab/adsorb Hydrogen and/or the mentioned chemical compound with low electron work function is formed in-situ, inside the reservoir from another chemical compound.
-   the mentioned chemical compound capable to ab/adsorb Hydrogen and/or the mentioned chemical compound with low electron work function is formed in-situ, inside the reservoir by dehydration of another chemical compound or by decarbonation.
-   the mentioned chemical compound capable to ab/adsorb Hydrogen and/or the mentioned chemical compound with low electron work function is formed in-situ, inside the reservoir by dehydrogenation of another chemical compound.
-   the mentioned chemical compound capable to ab/adsorb Hydrogen and/or the mentioned chemical compound with low electron work function is present inside the reservoir in the form of finely divided particles with granulometry lower or equal to 1mm.
-   the volume proportion of the mentioned chemical compound capable to ab/adsorb Hydrogen is lower or equal to 40% of the total volume of both compounds, the other being the mentioned chemical compound with low electron work function.
-   two reservoirs, each containing at least one mentioned chemical compound capable to ab/adsorb Hydrogen and at least one mentioned chemical compound with low electron work function, connected and interacting in function of the induced Hydrogen flow.

The present invention, moreover, proposes the energy producing processes as follows:

- first step in which the mentioned chemical compound capable to ab/adsorb Hydrogen is submitted to the Hydrogen pressure, equal or higher than the 60% of the mean known loading pressure limit, at the temperature of the process. All this, in the presence of at least one chemical compound with low electron work function. and
- second step in which the reacting compounds that underwent the first step are submitted to the Hydrogen pressure, equal or lower than the 40% of the mean known loading pressure limit.

BRIEF DESCRIPTION OF THE DRAWINGS

- Fig. 1, is a first possible realization step schematic view of the system, according to the invention.
- Fig. 2, is an enlarged cross-sectional view of the reservoir of system of the Fig. 1.
- Fig. 3, is a second possible schematic view of the system, according to the invention. - Fig. 4, exhibits the typical known shape of the Langmur's isothermals by which the pressure limits of Hydrogen pressure at given temperature in the two earlier mentioned reservoirs can be determined.
- Fig. 5, is the literature representation of the loading pressure limit isotherms for metal/hydrogen systems, by which the maximum loading pressure can be determined.
- Fig. 6, is the determination of the time constant of the calorimeter, where C1 is the temperature probe 23 of the support 22 when the calibration resistance C1 is heated (DC current) during a given time inside the support 22, and C2 is the heater temperature. The fit of C1 by an exponential gives the time constant of the calorimeter ($s^{-1}$)
- Fig. 7, is the determination of the water equivalent of the calorimeter, the plot of the Fig. 7 expressed in °C, corresponding to the cumulated temperature difference between the reservoir and the heater plus the cumulated temperature differences of the support 22 of the system described in Fig. 1.
- Fig. 8, shows the experimental curves during several cycles, of the energy in Joules produced during the pressurization of the reservoir (curve C6), and consumption of the energy during the de-pressurization (curve C7) in the Titanium experiment.
- Fig. 9, shows the evolution of the power in Watt (curve C8), calculated from the calorimetric equation, during several cycles of pressurization/depressurization of the reservoir in the titanium experiment
- Fig. 10 shows the evolution with time of the instant power released during the Nickel experiment
- Fig. 11 shows the evolution with time of the cumulated energy produced in the Nickel experiment

DETAILED DESCRIPTION OF POSSIBLE EMBODIMENTS

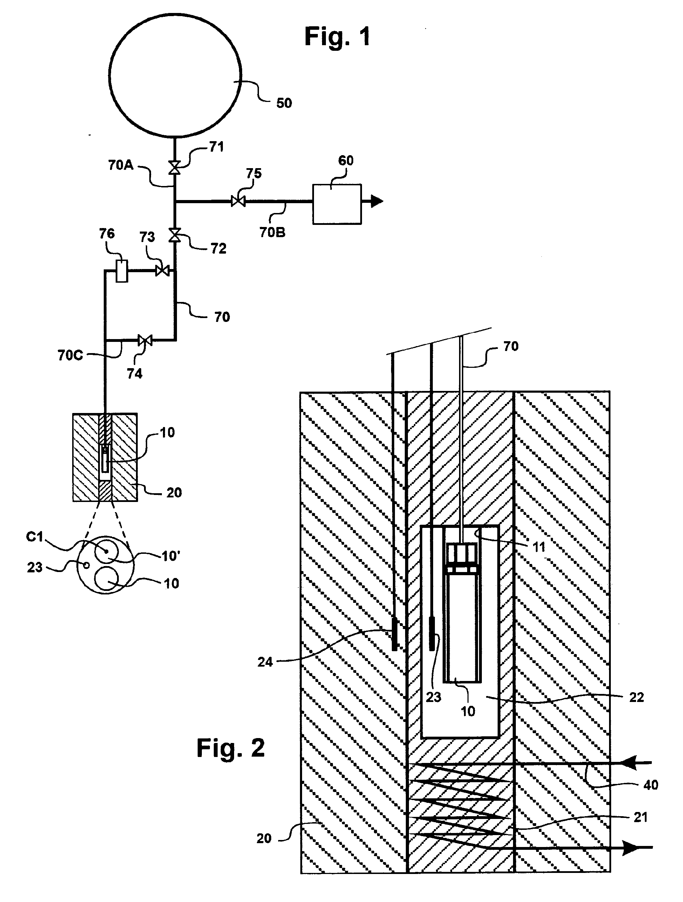

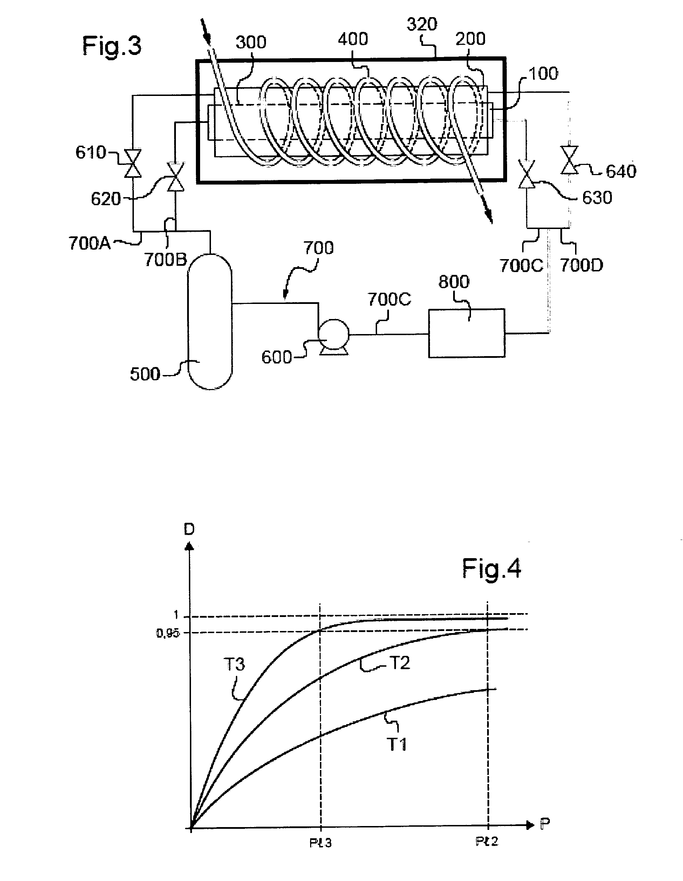

Fig. 1 and 3, represent two possible realizations of the system, according to the invention. Independent of the choice of the set-up the following elements need to be present:

- at least one reservoir 10; 100, 200, containing at least one chemical compound capable to ab/adsorb Hydrogen.
- the means 20, 300 for heating the contents of the reservoir 10; 100, 200.
- the means 50, 60, 70; 500, 600, 700 to introduce Hydrogen containing gas in the mentioned reservoir 10; 100, 200, and means to control the pressure of the gas in this reservoir.
- the means 400 to recover the thermal energy produced in the reservoir and potential means of the thermal energy recovery system in support 22.

More precisely the first mode of the realisation presented in Fig.1 and 2, comprises only one reservoir 10, which is a metallic capsule, of volume 5qc, made from 316-stainless steel, beside the calibration resistance C1placed in a reservoir 10' identical to 10.

The capsule 10, is placed in the heater 20, capable to heat the content of the capsule 10. This system can be defined a differential calorimeter.

The capsule 10, is placed in the cylindrical support 22, made of an efficient heat conductor, surrounded by insulating layer 21.

The role of the insulating material 21, which fully fills the shaft between the heater 20 and cylinder 22, is to create a thermal barrier on the heat flux trajectory, generated by the heater 20, towards the aluminium cylinder 22. This thermal barrier creates an important thermal gradient. At the equilibrium temperature of the capsule, which is very close to the temperature of the support 22, measured by the probe 23, the capsule temperature is several degrees lower than the regulated heater temperature, measured by another probe 24.

The probe 24, is placed between the heater 20 and insulating material 21. The probe 23 is placed inside the support 22, between reservoir 10 and resistance C1.

In this case, the support 22 is an Aluminium cylinder, and the shaft 21 is glasswool, but the materials for this purpose may vary.

Capsule 10 single opening, is connected to line 70, permitting the gas containing Hydrogen to circulate.

In the second possible realization way (Fig. 3) of the energy production system according to the invention, the two reservoirs 100 and 200 are foreseen. The configuration of these two reservoirs are two concentric metallic tubes, with the same volume capacity. Both reservoirs are connected on both extremities to the line 700, where the gas containing Hydrogen circulates. Heating device 300, is preferably placed around the external wall of the cylinder 100. Such device, according to the invention, can be of any known material and any set-up configuration necessary to heat the content of both reservoirs to the temperature between 300 and 900°C in order to trigger the reaction and it can be turned off after a given amount of time.

The reservoirs 100 and 200 are placed in an insulated chamber 320.

Thermal energy, produced with this system according to the invention, is then recovered by a heat transfer fluid contained in a pipe 400, that is winded around and heated in the contact with the reservoir 200, and which then conveys the energy to any known user of the thermal energy.

The means and materials to recover the produced energy can be any means of the state of the art.

Engineering means and materials for the construction and configuration of this energy production system can be any means of the state of the art.

The configuration of energy recovery system 40, (Fig. 2) will be applied to this energy production system according to the invention, in case of power output higher then 100Watt. Below that level of energy production the configuration represented in Fig.1 and 2 is for the study purposes only and for the purpose of the measurements/study accuracy, the thermal energy recovery system is unadvisable.

However, the system 40 (Fig.2), will be a metallic tube, placed inside the support 22, from which the heat transfer fluid transports the thermal energy produced according to the invention, into an external heat exchanger and finally to the user.

The circulation line 70;700 of the gas containing Hydrogen, includes the Hydrogen tank 50;500, a vacuum pump 60;600, manifold control valves 71, 72,73,75 ; 610, 620, 630, 640 and the gas expansion turbine 800, in the case of the second possible embodiment.

Whereas, in the case of the first possible realization way (Fig.1), flow-meter 76, is placed on this circulation line in order to precisely measure the gas flow entering the capsule 10.

As previously mentioned the capsule 10 and reservoirs 100, 200 contain at least one chemical compound able to ad/absorb Hydrogen.

## KNOWN LITERATURE BACKGROUND FACTS

Ad-sorbtion is a surface phenomenon, where an Hydrogen atom is bound to an atom of a solid surface. Absobtion instead, is when an Hydrogen atom enters the volume of the solid. It is well known that gases, like di-hydrogen, can ad-sorbe on solids. This phenomenon is the basis of the BET method, to measure the surface of solids. BET was described in 1938, by Brunauer, Emmet and Teller in the "Adsorbtion Of Gases In Multi-Molecular Layers", published in Journal Of American Chemical Society in 1938, Vol. 60, Page 309.

The chemical ad-sorbtion of Hydrogen on metals is described in "Introduction To Chemical Adsorbtion Analitical Techniques And Their Applications To Catalysis" by Paul A. Webb, Published in Micrometrics Instrument Corp., Norcross, Georgia USA, Page 30093.

The bonds involved in the physical ad-sorbtion are weak bonds. Like for instance, Van der Waal's bonds, weak and electrical interactions between atoms and/or molecules of low intensity with typical values of a few KiloJoules per Mole.

Hydrogen can also ad-sorb chemically on solids with chemical bonds that can be ionic, co-valent or metallic. Chemical bonds are electromagnetic interactions, with strong energy (between 10 and 300 kJ/mole), implying the electron sharing between atoms.

## ORIGIN OF THE ENERGY PRODUCTION

The interactions between Hydrogen and metals and/or chemical compounds, in our engineering set-up does release the energy. This energy comes from short distance electro-magnetic interactions between the nucleus of the compound A atoms and a very small size electrical di-pole, generated by Hydrogen. The energy of such bonds is in the order of magnitude of the k layer s-electrons energy of the compound A atoms (between 10 and 80 keV), as the consequence of surface electron cloud reaction. This energy production is thus a result of two consequent processes chemical and physical interaction which is not nuclear.

Materials of the A group have high Hydrogen ab/adsorbtion capacity and are materials with high electron work function, whereas the materials in the B group, have low hydrogen ab/adsorbtion capacity but have low electron work function.

Description:

- at the contact surface between compound A able to ad/absorb Hydrogen, and compound B with low electron work function, there is a thermal-ionic-electron-cloud (e-*therm*). During the Hydrogen absorbtion or adsorbtion process by compound A, transient eKa neutrons are formed at the surface between the thermo-ionic-electrons with very low kinetic energy and the protons ($p+_{ads}$) which are immobilized during their ad/absorbtion in compound A.
- ab/ad sorbtion occurs in two steps:

   1) dissociation of Hydrogen molecule into two Hydrogen atoms:

   $$H_2 \rightarrow 2H$$

   2) ad/absorbtion of Hydrogen atoms in the compound A lattice:

   $$H \rightarrow p+_{ads} + e-_{cond}$$

   ($e-_{cond}$ is the electron of the Hydrogen atom that is now in the conduction bound of the compound A).

Formation of the eKa neutron:

$$p+_{ads} + e-_{therm} \rightarrow n_{eKa}$$

Because of it's neutrality, the eKa neutron penetrates into the electronic shell of compound A, but because of it's transiency it cannot reach the A compound nucleus. When it reverses to proton and electron these two electrical charges constitute the di-pole, which is attracted by the electrically positive nucleus of the compound A. This di-pole is then bound by electrical attraction to the positive nucleus $N_A$ of compound A at very short distance from this nucleus (pico-meters). This bond results in a formation of a Pico-Hydride according to the reaction:

$$N_A + (e-, p) = N_A, (e-, p) + Energy$$

Where (e-, p+) is the reversed di-pole eKa neutron and $N_A$ is the nucleus of compound A.

- the energy release is in the order of magnitude of the s electrons of the k-level of the compound A that is in the order of keV namely 100 Mega Joules per mole (MJ/mole) that of course varies according to the components of the compound A.
- most of the energy comes from the formation of the pico-hydride. Their formation energies vary from few keV for the lightest A components to a few tenths of keV for the heaviest ones.
- the pico-hydrides formed are not totally stable and transmute with very low reaction rates.
- the pico-hydride reaction can be formed with any material in above mentioned A group, however the reaction rates are limited by the concentration of the thermo-ionic electrons.
- any material regardless of it's work function is surrounded by a thermal-ionic cloud of electrons with very low kinetic energy.
- most of the materials in group A have a rather high work function hence the thermo-ionic electron concentration on their surface is low.
- materials in the group A and materials in the group B interact on the contact surface. This in the assembly increases the thermo-ionic concentration which then results in a higher rate of formation of the eKa neutrons and hence the energy production.

The formation of the eKa neutron is a phenomenon occurring in the transitory state of the system during the Hydrogen loading into the chemical compound able to ab/adsorb Hydrogen under the given pressure increase (previously defined) and only in a well defined pressure variation. In order to create that state in the system, the cycling of the Hydrogen loading and de-loading is recommended.

The elapsed time of Hydrogen pressurization and de-pressurization cycles depends upon the reservoir volume and the compounds quantity. It also depends upon the way compounds A and B are installed in the reactor.

**RADIATION**

In both engineering assemblies, a low X-radiation energy screen is advisable. During the formation of the pico-hydride which is the energy production source, also the low energy X-photon is emitted with the energy lower or equal to the energy of the pico-hydride formationthat is the energy of the k layer s electrons of A.

In both engineering assemblies, a low flux gamma-radiation screen is also advisable. Pico-hydrides are not completely stable and they eventually do transmute with very low reaction rates, hence they do emit nuclear radiations with a very small emission rate. (lower than $10^{-10}$ s$^{-1}$)

**EXPERIMENTAL PART**

I/ CALIBRATION OF THE DIFFERENTIAL CALORIMETER

To calibrate the calorimeter, use is made of the well known calorimetric equation in transient regime. If $W(t)$ $Js^{-1}$ is the power exchanged at time t, $MC$ $JK^{-1}$ is the water equivalent of the calorimeter, $\Lambda$ $JK^{-1}s^{-1}$ the heat transfert coefficient, $\Theta_R(t)$ $K$ the reactor temperature at time t and $\Theta_R(0)$ $K$ the reactor temperature at t=0, the transient calorimetric equation is:

$$W(t)dt = MC\left[\left\{\Theta_R(t+dt)-\Theta_R(t)\right\}\right]+\Lambda\left[\left\{\Theta_R(t)-\Theta_R(0)\right\}dt\right]$$

if the interval of data monitoring is $\Delta t$ $s$ the spreadsheet used to process the monitored data will give the instant power and the total energy exchanged as

$$W(t) = \frac{MC}{\Delta t}\left[\left\{\Theta_R(t+\Delta t)-\Theta_R(t)\right\}+\left\{\Theta_R(t)-\Theta_R(0)\right\}\tau\Delta t\right]$$

and

$$\int_0^T W(t)dt = \sum_0^T MC\left[\left\{\Theta_R(t+dt)-\Theta_R(t)\right\}+\left\{\Theta_R(t)-\Theta_R(0)\right\}\tau\Delta t\right]$$

where $\tau = \dfrac{\Lambda}{MC}$ is the time constant of the calorimeter.

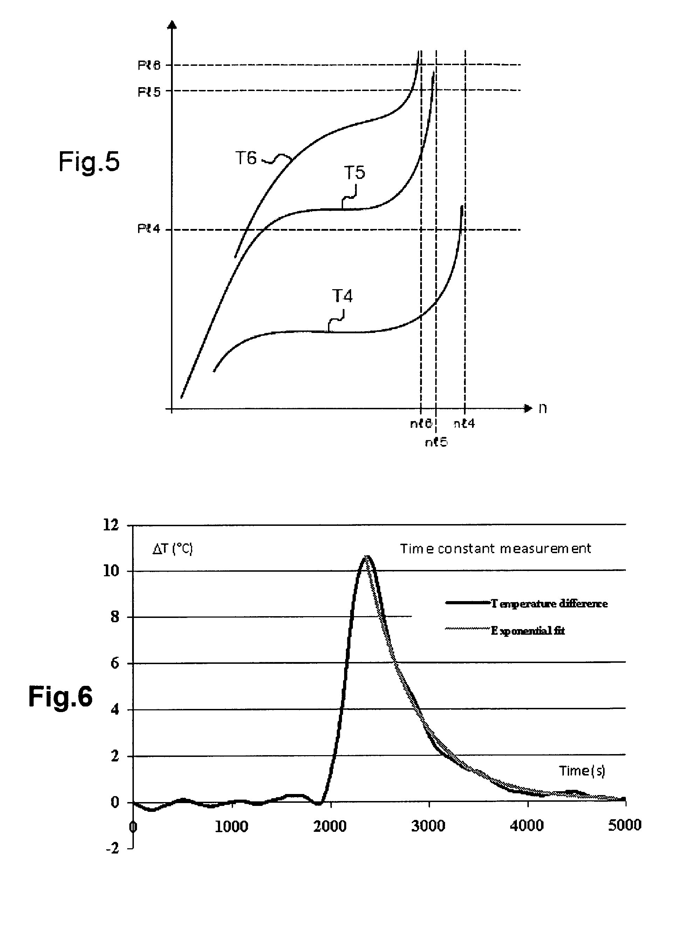

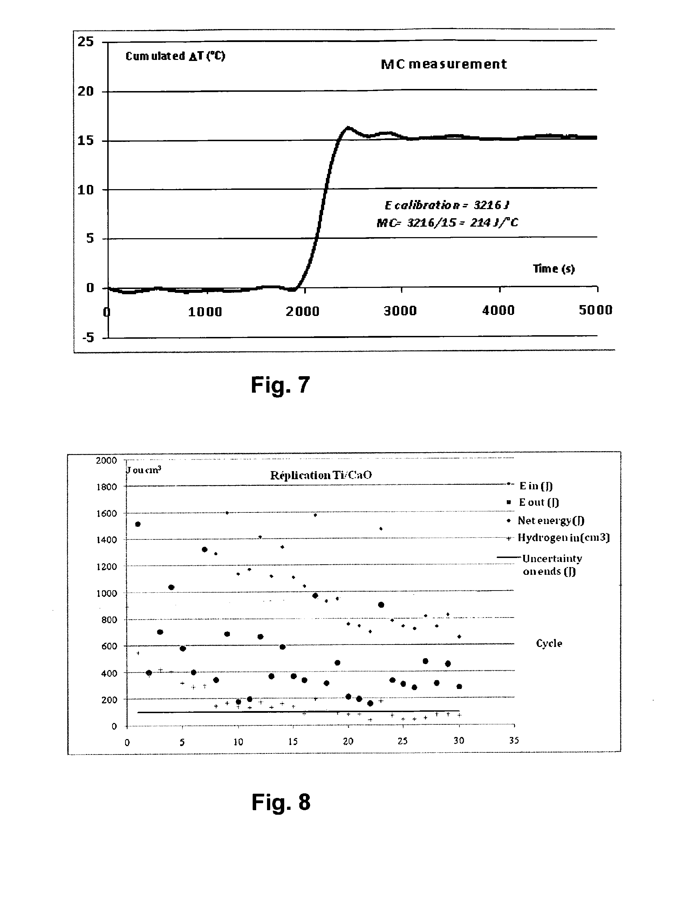

The differential form of this equation describes the evolution of the power generated by the reaction as function of time. The integral form gives the total energy produced at a given time. To measure the 2 parameters of the calorimeter (time constant and water equivalent) following procedure is used: a measured amount of electrical energy (DC current) is injected in C1. Data are monitored every 5 seconds. The experimental data thus obtained are processed through these equations and yield the time constant t ($s^{-1}$) of the calorimeter by fitting the experimental data by an exponential curve (Fig.6) and its water equivalent MC (J°C$^{-1}$). The water equivalent is determined by using the cumulated temperature differences $\Delta\Theta$ °C (fig7) and the amount of energy Ec(J) injected during the calibration (MC=Ec/ $\Delta\Theta$). Following values were found:

$$t=0,0015 \; s\text{-}1 \qquad MC=224,3 \; J°C^{-1}$$

These values slightly vary from one experiment to another, but correspond to the exact positioning of the 22 for a given experiment (influence of experiment assembling and disassembling) and are measured for each experiment. These values are then used to calculate the instant power and the cumulated energy in a given experiment.

II/ EXPERIMENT WITH TITANIUM and CALCIUM OXIDE

Preparation of the test sample:

2.04 g of TiH2 and 4,47 g of Calcium oxide are mixed and crushed by ball milling (dispersant propanol) to a granulometry round 10 microns.

Running the test

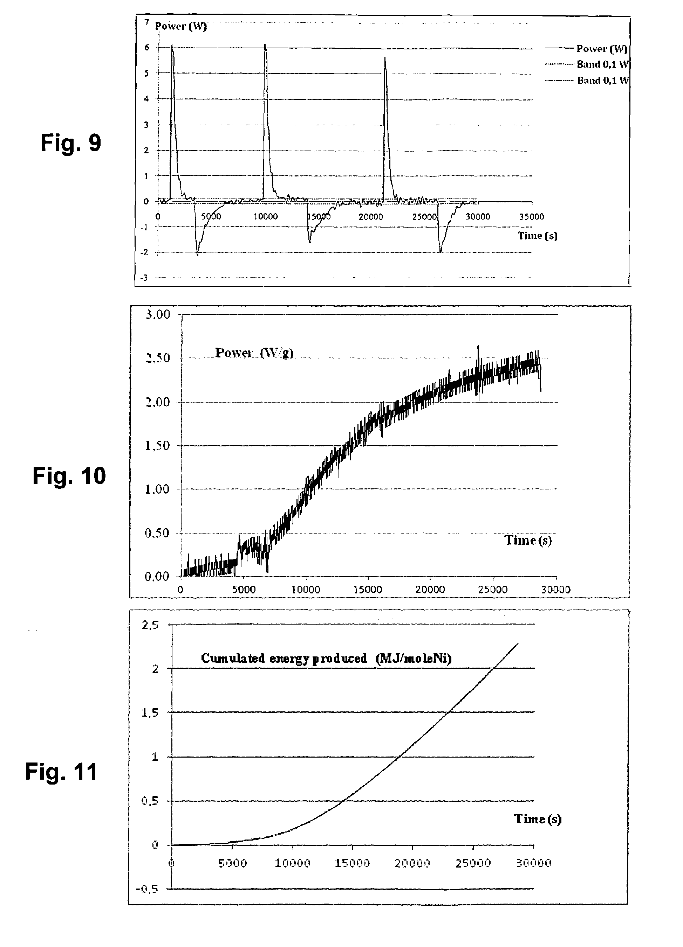

The above mixture is introduced in capsule 10, and heated under vacuum (0,1 mb) to a temperature of 549 °C. Hydrogen is then introduced in capsule 10, up to a pressure of 10 bars. The temperature of the support 22 rises (Figure 8). The capsule 10 is then again placed under vacuum (0,1 mb). The temperature of support 22 decreases and then came back to the base line. 30 such cycles are performed. Using the measured values t and MC of the calorimeter, the energy exchanged during the 30 cycles can be calculated. Figure 9 is a plot of these exchanges during the 30 cycles and figure 10 is the power exchanged during the first 3 cycles.

Following table gives the overall energy balance during the 30 cycles. The excess energy during the first 5 cycles have been isolated as they can correspond to modifications of the titanium lattice during the first loadings/ deloadings.

It can be seen that over the 25 following cycles the net energy produced expressed in MJ.cycle/mole H2 is very high (48,7).

|  | First 5 cycles | 25 last cycles |
|---|---|---|
| Total energy produced at loading | 16574 | 28417 |
| Total energy produced at deloading | -12338 | -17307 |
| Total net energy produced | 4237 | 11109 |
| H2 consumed (moles) | 0,092 | 0,137 |
| H2 consumed per cycle (mole) | 0,018 | 0,006 |
| Energy produced (J/mole H2) | 179195 | 207473 |
| Energy consumed (J/mole H2) | -133388 | -126362 |
| Net energy produced (J/mole H2) | 45806 | 81111 |
| Net energy produced (J.cycle/mole H2) | 1145158 | 48666784 |
| Net energy produced (J.cycle/mole H2) | 1,15 | 48,67 |

III/ EXPERIMENT WITH NICKEL and CALCIUM OXIDE

Preparation of the test sample:

2,07 g of a mixture containing 50% w of Nickel formate di-hydrate and 50°w of Calcium oxide are mixed and crushed together by ball-milling down to a granulometry of a few microns (dispersant propanol). The dry precursor powder is loaded into a hollow copper cylinder (external diameter 8 mm, diameter of the central hole 6 mm). During the loading, the powder is compressed using a screw-press, resulting in the volume of the voids between the powder grains in the cylinder being equal to 60% of the total volume.

The copper cylinder is then introduced into the reservoir 10, which is heated up to 350°C under vacuum. The precursor is thus activated according to the reaction:

$$Ni(HCO2)_2, 2H2O = Nickel\ (nano\text{-}particles) + CO2 + H2 + H2O$$

Running the test:

The support 22 temperature is raised under vacuum to 435°C. Hydrogen is then introduced by steps from 1 to 20 bars in 15 minutes. The energy production then starts and the experiment is stopped when the power is 2.5 W/gNickel (fig. 11) and the cumulated energy 2.3 MJ/moleNickel (Fig. 12), values calculated from the calorimetric equation.

This last experiment illustrate one of the advantages of the present invention: the Nickel nano-particles are not introduced as such in the reactor which would be a lengthy and delicate operation (Raney Nickel for instance ignites easily in air).

According to this invention, an inert precursor (here Nickel formate) is loaded and compressed in copper cylinders, that can subsequently be safely loaded in the reactor where it is in-situ activated prior to energy generation.

It will be obvious for somebody knowledgeable in catalysis, that many such precursors can be manufactured (using for instance sol/gel technics). These various variants would obviously fall under the scope of this patent.

**DISCUSSION:**

**Energy exchanges when loading/unloading a metal with hydrogen:**

In view of finding a way to store hydrogen between the time of its production and the time of its utilisation, much experimental work has been done using metals as storage means. Indeed, metals able to absorb hydrogen can store economically valuable amounts of hydrogen. The best candidates are metals that have low loading/unloading pressure and temperature. Alloys like $NiLa_5$ and $FeTi$ have extensively been studied. The loading/unloading of metals by hydrogen is a reversible reaction, which is exothermal when loading and endothermal when unloading. On a cycle, there is no net energy production. What is claimed in this patent is that a mixture of a metal able to absorb hydrogen with a compound having a low electron work function result indeed in a net energy production over a loading/unloading cycle. This is not the case for instance of the patent US 4 589 919A (GOODELL Paul D) 20 Mai 1986. This patent discloses in fact a way to store the heat released when loading the metal with hydrogen, to further use it when unloading it. This is also the case of the patent US 4 566 281A (SANDROCK Gary D) 28 Janvier 1986.

**Use of a precursor:**

Finely dispersed metals as Nickel for instance, are difficult to handle as such. Raney nickel for instance ignites when dried in air. The invention in this patent is to safely prepare a precursor (using Nickel formate for instance). The precursor is then safely loaded in the reactor and activated in situ. The invention is not the recipe of the precursor (many such recipes can be found using all the knowledge in the field of catalysis). It is the use of a precursor in the process.

**Possibilities for using the results disclosed in this patent for an industrial application:**

The experiments that have been run, show the possibility of generating a power of some 1,3 W/cm3. For this the heater is heated to 430°C, using a power of 90W.

The energetic efficiency is thus very low.

Up-scaling the process will considerably increase the efficiency. A nuclear power plant, consists basically in a reactor generating heat, coupled to a steam generator, the coupling being through a heat carrier fluid.

A cylindrical reactor 10 m high and 2 m diameter has an external surface of some 70 m2. If this reactor in insulated by an insulation layer with heat conductivity 0,2 W/mK and thickness 20 cm, the losses are some 30 kW for the whole reactor (reactor temperature 440°C, outside temperature of the insulating layer 50°C).

If 45% of the reactor volume (percentage that takes into account the volume needed for the recycling) is filled with the mixture generating 1,3 W/cm3, then a total power of some 18 MW is generated (compared to losses amounting to 15 kW). A sizeable amount of energy is thus available, that can be transferred to a steam generator (for instance by a circulation of $CO_2$ under pressure) and the reactor is self sustained.

**Claims**

**1.** An energy production device comprising:

> (a) one reservoir (10;100,200) containing at least one chemical compound able to ad/absorb hydrogen;
> (b) means (20;300) for heating, the contents of said reservoir (10; 100,200);
> (c) means (50,60,70,71,72,73,74,75; 500,600,700,610,620,630,640) to introduce gas containing Hydrogen, in the reservoir (10; 100,200) and means to control the pressure of said reservoir, (10;100,200); and

(d) said reservoir (10; 100,200) containing also the chemical compound with low electron work function.

2. The energy production device according to claim 1 wherein the energy production is stimulated by successively loading and unloading the hydrogen into and from the reservoir (10;100,200) by cyclic variations of the pressure of said hydrogen.

3. The energy production device according to claim1 wherein the mixture of the chemical compound(s) able to ad/absorb hydrogen and the chemical compound with low electron work function is compressed into a thermally conducting container, is in the form of compressed pellets or in the form of compressed extrudates.

4. The energy production device according to claim 1 wherein the temperature of the reservoir (10;100,200) is comprised between 400 and 550°C.

5. The device according to claim 1 wherein the chemical compound able to ad/absorb hydrogen is a transition metal, is an actinide or lanthanide capable to form metallic hydride or an hydride intermediate between metallic hydride and ionic hydride or between metallic hydride and covalent hydride.

6. The device according to claim 2 wherein mentioned chemical compound able to absorb hydrogen is one selected from the following elements:

Scandium, Yttrium, Lanthanum, Actinium, Ceasium, Praseodymium, Neodymium, Samarium, Gadolinium, Terbium, Dysprosium, Holmium, Erbium, Thulium, Lutecium, Titanium, Zirconium, Hafnium, Thorium, Protactinium, Uranium, Neptunium, Plutonium, Americium, Vanadium, Niobium, Tantalum, Chromium, Iron, Nickel, Cobalt, .Palladium, Magnesium, Europium, Copper or an alloy of several of these compounds.

7. The device according to claims 1,2,3, wherein the chemical compound having a low electron work function is an alkaline metal an alcalino-earth metal, an oxide of an alkaline metal or of an alcalino-earth metal or a compound comprising at least one atom of alkaline metal or earth alkaline metal.

8. A device according to claim 7 wherein the chemical compound having a low electron work function is calcium or calcium oxide

9. The device according to claims 1-3, wherein the chemical compound having a low electron work function is lanthanum hexaboride.

10. The device according to the previous claims, wherein the chemical compound able to ad/absorb hydrogen and/or the chemical compound having a low electron work function inside the reservoir (10;100,200) is in finely divided form with the granulometry lower or equal to 1mm.

11. The energy production device according to claims 1,2,3 and 4, wherein the mixture of the chemical compound(s) able to ad/absorb hydrogen and the chemical compound with low electron work function is obtained by activating one or more precursor(s) in the reactor.

12. The device according to the preceding claims, wherein the volume proportion of the chemical compound able to ad/absorb hydrogen compared to the total volume of both, the chemical compound able to ad/absorb hydrogen and of the chemical compound having a low electron work function inside the reservoir (10;100,200) is lower or equal to 40%.

13. The device according to the preceding claims wherein the device is provided with two reservoirs (100,200) each containing at least one chemical compound able to ad/absorb hydrogen and at least one chemical compound having a low electron work function.

14. An energy production process comprising at least the following steps:

- a first step in which a chemical compound able to ad/absorb hydrogen is submitted to hydrogen pressure higher or equal to 60% of the limit loading pressure in hydrogen of this compound; and
- a second step in which the reaction product obtained in the first step is submitted to a hydrogen pressure lower or equal to 40% of the limit loading pressure.

**15.** The process, according to the claim 14 wherein the mentioned chemical compound able to ad/absorb hydrogen and/or chemical compound having a low electron work function, is obtained by precipitation technique or grinding technique of these compounds.

# Fig. 1

# Fig. 2

## Fig.3

## Fig.4

Fig.5

Fig.6

**Fig. 7**

**Fig. 8**

**Fig. 9**

**Fig. 10**

**Fig. 11**

Europäisches
Patentamt

European
Patent Office

Office européen
des brevets

# EUROPEAN SEARCH REPORT

Application Number

EP 12 07 5001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 589 919 A (GOODELL PAUL D [US] ET AL) 20 May 1986 (1986-05-20) <br> * column 2, line 51 - column 3, line 4 * <br> * column 3, lines 5-16, 40-68 * <br> * column 4, lines 23-29; table II * | 1-3,5-8, 10,12-15 | INV. <br> C01B3/06 <br> G21F9/00 |
| X | US 4 566 281 A (SANDROCK GARY D [US] ET AL) 28 January 1986 (1986-01-28) <br> * column 1, lines 43-46 * <br> * column 2, lines 28-33 * <br> * column 3, lines 45-54 * <br> * column 4, line 18; figures 1,2 * | 1-3,5-8, 13,14 | |
| X | US 2003/173229 A1 (KANOYA IZURU [JP] ET AL) 18 September 2003 (2003-09-18) <br> * paragraphs [0024], [0027] * | 1,2,5-7, 10,14,15 | |
| A | GB 2 078 210 A (KERNFORSCHUNGSANLAGE JUELICH) 6 January 1982 (1982-01-06) <br> * claims 1-5, 8; examples 1, 4 * | 1-15 | |
| A | EP 0 094 136 A1 (STAMICARBON [NL]) 16 November 1983 (1983-11-16) <br> * page 4, lines 28-37; claims 1,5,7 * | 1-15 | TECHNICAL FIELDS SEARCHED (IPC) <br> C01B <br> G21F |
| A | CERRON-ZEBALLOS E ET AL: "INVESTIGATION OF ANOMALOUS HEAT PRODUCTION IN NI-H SYSTEMS", SOCIETA ITALIANA DI FISICA, NUOVO CIMENTO A, EDITRICE COMPOSITORI, BOLOGNA, IT, vol. 109A, no. 12, 1 December 1996 (1996-12-01), pages 1645-1654, XP008103248, ISSN: 0369-3546 <br> * page 1645 - page 1647 * | 1-15 | |

The present search report has been drawn up for all claims

| Place of search | Date of completion of the search | Examiner |
|---|---|---|
| The Hague | 23 April 2012 | Galleiske, Anke |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 12 07 5001

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2012

| Patent document cited in search report | | Publication date | Patent family member(s) | | Publication date |
|---|---|---|---|---|---|
| US 4589919 | A | 20-05-1986 | CA | 1182801 A1 | 19-02-1985 |
| | | | DE | 3266546 D1 | 31-10-1985 |
| | | | EP | 0069555 A1 | 12-01-1983 |
| | | | JP | 1035761 B | 27-07-1989 |
| | | | JP | 1564125 C | 12-06-1990 |
| | | | JP | 58015001 A | 28-01-1983 |
| | | | US | 4589919 A | 20-05-1986 |
| | | | ZA | 8204504 A | 27-04-1983 |
| US 4566281 | A | 28-01-1986 | CA | 1123293 A1 | 11-05-1982 |
| | | | DE | 3062153 D1 | 07-04-1983 |
| | | | EP | 0015106 A1 | 03-09-1980 |
| | | | ES | 8101919 A1 | 01-04-1981 |
| | | | JP | 1514170 C | 24-08-1989 |
| | | | JP | 55132632 A | 15-10-1980 |
| | | | JP | 63062254 B | 01-12-1988 |
| | | | US | 4566281 A | 28-01-1986 |
| | | | ZA | 8000535 A | 25-02-1981 |
| US 2003173229 | A1 | 18-09-2003 | JP | 4187970 B2 | 26-11-2008 |
| | | | JP | 2003212501 A | 30-07-2003 |
| | | | US | 2003173229 A1 | 18-09-2003 |
| GB 2078210 | A | 06-01-1982 | CA | 1165302 A1 | 10-04-1984 |
| | | | DE | 3022708 A1 | 07-01-1982 |
| | | | FR | 2485159 A1 | 24-12-1981 |
| | | | GB | 2078210 A | 06-01-1982 |
| | | | JP | 57029502 A | 17-02-1982 |
| | | | US | 4389239 A | 21-06-1983 |
| EP 0094136 | A1 | 16-11-1983 | DE | 3374665 D1 | 07-01-1988 |
| | | | EP | 0094136 A1 | 16-11-1983 |
| | | | JP | 58217401 A | 17-12-1983 |
| | | | NL | 8201885 A | 01-12-1983 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4589919 A, GOODELL Paul D

- US 4566281 A, SANDROCK Gary D

**Non-patent literature cited in the description**

- **BRUNAUER ; EMMET ; TELLER.** Adsorbtion Of Gases In Multi-Molecular Layers. *Journal Of American Chemical Society,* 1938, vol. 60, 309

- **PAUL A. WEBB.** Introduction To Chemical Adsorbtion Analitical Techniques And Their Applications To Catalysis. Micrometrics Instrument Corp, 30093